# EUROPÄISCHE PATENTSCHRIFT

(11) **EP 2 374 342 B1**
(45) Veröffentlichungstag und Bekanntmachung des Hinweises auf die Patenterteilung: **22.05.2013**
(21) Anmeldenummer: 11160220.7
(22) Anmeldetag: 29.03.2011
(51) Int. Cl.: A01C 7/04, A01C 19/02

(54) **Sämaschine für die Einzelkornsaat und Verfahren zum Steuern einer Dosiervorrichtung einer solchen Sämaschine**
Single-grain seeder and method for controlling a metering device of such a seeder
Semoir monograine et procédé de commande d'un dispositif de dosage d'un tel semoir

(30) Priorität: 09.04.2010 DE 102010014448
(43) Veröffentlichungstag der Anmeldung: 12.10.2011
(73) Patentinhaber: Horsch Maschinen GmbH, 92421 Schwandorf (DE)
(72) Erfinder: Horsch, Philipp, 92421, Schwandorf (DE); Horsch, Thomas, 74321, Bietigheim-Bissingen (DE)
(74) Vertreter: Benninger, Johannes

(56) Entgegenhaltungen:
- EP-A1- 0 592 995
- WO-A1-2008/155235
- US-A1- 2005 257 725
- US-A1- 2009 000 533

## Beschreibung

Die vorliegende Erfindung betrifft eine Sämaschine für die Einzelkornsaat mit den Merkmalen des unabhängigen Anspruchs 1. Die Sämaschine umfasst mindesten ein an einem Tragrahmen angeordnetes Säaggregat, das eine elektromotorisch betriebene Dosiervorrichtung zu vereinzelten Ausgabe von Saatkörnern aufweist. Die Erfindung betrifft weiterhin ein Verfahren zum Steuern einer Dosiervorrichtung einer Sämaschine für die Einzelkornsaat mit den Merkmalen des unabhängigen Verfahrensanspruchs 6.

Aus dem Stand der Technik sind zahlreiche Ausführungsvarianten von Sämaschinen für die Einzelkornsaat bekannt. So offenbart beispielsweise die WO 2009/043853 A1 eine Sämaschine für Einzelkorn mit mehreren Säaggregaten. Die Säaggregate werden jeweils von einem Motor angetrieben, der an eine Steuereinheit gekoppelt sein kann. Die Steuerungseinheit befindet sich bei den aus dem Stand der Technik bekannten Sämaschinen im Bereich des Führergehäuses des Zugefahrzeuges.

Eine ähnliche Vorrichtung zeigt die EP 0 592 995 A1. Auch hier werden die Säaggregate jeweils von einem Motor angetrieben, der an eine Steuereinheit bzw. eine Ein-und Ausgabeeinheit gekoppelt sein kann.

Die US 6 745 710 B2 offenbart eine Einzelkornsämaschine mit einem mechanischen Antrieb, bei der eine Wellenverbindung innerhalb des Antriebsstranges für das rotierende Dosierorgan manuell aufgetrennt werden kann. Diese Auftrennung ermöglicht zwar die Abschaltung einzelner Säaggregate, bspw. um Fahrgassen berücksichtigen zu können, doch erfordert dies von der Bedienperson einen nicht unerheblichen manuellen Arbeitsaufwand.

Aus der DE 37 19 269 A1 ist weiterhin eine Hydraulikanlage für eine landwirtschaftliche Verteilmaschine bekannt, bei der ein Antrieb mittels einer manuell zu betätigenden Ventilschaltung je nach Bedarf deaktiviert werden kann.

Die Abschaltung oder Deaktivierung einzelner Säaggregate ist somit aus dem Stand der Technik durchaus bekannt, doch dienen diese Systeme lediglich der Unterbrechung einzelner Antriebe während der Aussaat. Soll hingegen bspw. eine Funktionsüberprüfung der einzelnen Dosiervorrichtungen im Rahmen von Wartungsarbeiten erfolgen, so muss eine umständliche Ansteuerung der Dosiervorrichtungen über im Führergehäuse angeordnete Steuerungsgeräte erfolgen.

Eine Aufgabe der Erfindung besteht daher darin, eine Sämaschine zur Verfügung zu stellen, welche insbesondere zum Zwecke von Inspektions- oder Wartungsarbeiten eine erleichterte Aktivierung bzw. Deaktivierung einzelner Säaggregate ermöglicht. Diese Eingriffsmöglichkeit soll möglichst einfach und auf unkomplizierte Weise ausgestaltet und damit kostengünstig realisierbar sein.

Die Aufgabe der Erfindung wird durch eine Sämaschine mit den Merkmalen im Anspruch 1 gelöst. Zur Lösung dieser Aufgabe schlägt die Erfindung eine Sämaschine für Einzelkornsaat mit mindestens einem Saatgutvorratsbehälter und mindestens einem an einem Tragrahmen angeordneten, vom Saatgutvorratsbehälter versorgten Säaggregat vor. So kann bspw. ein einziger Saatgutvorratsbehälter vorhanden sein. Wahlweise können auch mehrere Saatgutvorratsbehälter vorhanden sein, wobei typischerweise jedes einzelne Säaggregat einen einzelnen Saatgutvorratsbehälter aufweisen kann. Der Vorratsbehälter muss nicht unbedingt von der Dosiervorrichtung räumlich getrennt sein. So kann der Vorratsbehälter wahlweise auch direkt auf der Dosiervorrichtung bzw. auf der entsprechenden Saatreihe montiert sein. Die Erfindung schlägt eine Sämaschine vor, die eine Möglichkeit bietet, die Dosiervorrichtungen unabhängig von der Steuerungseinrichtung direkt anzusteuern bzw. zu betätigen Diese Betätigungen können sich insbesondere im Bereich der Dosiervorrichtung befinden. Wenn mehrere Dosiervorrichtungen vorhanden sind, können diese wahlweise gemeinsam oder zumindest teilweise gemeinsam oder auch selektiv betätigt werden.

Der Tragrahmen mit den daran angeordneten Säaggregaten kann beispielsweise als Hohlprofil ausgebildet sein. Das verwendete Material muss hinsichtlich seiner Festigkeit derart gewählt werden, dass es den während des Betriebes der Sämaschine auftretenden Kräften entgegenwirken kann. Im Rahmen der vorliegenden Erfindung ist mindestens ein Säaggregat vorhanden. In einer bevorzugten Ausführungsform der vorliegenden Erfindung sind mehrere Säaggregate am Tragrahmen angeordnet. Diese können beispielsweise parallel und/oder nebeneinander am Tragrahmen angeordnet sein.

Weiter kann jedes Säaggregat mindestens ein Laufrad, Stützrad und/oder Andruckrollen bzw. ein Paar solcher Andruckrollen umfassen. Die Andruckrollen können insbesondere paarweise ausgebildet sein und V-förmig zueinander gestellt sein. Das optionale Laufrad bzw. Stützrad kann beispielsweise federnd am Säaggregat angeordnet sein.

Auch weist die Sämaschine eine elektromotorisch betriebene Dosiervorrichtung zur vereinzelten Ausgabe von Saatkörnern auf. Diese Dosiervorrichtungen dienen zum Abteilen und zum Einbringen von vereinzelten Saatkörnern in vorgegebenen Abständen innerhalb von Reihen auf dem Acker. Hierzu steht dem Fachmann zur Ausgestaltung der vorliegenden Erfindung eine Vielzahl von aus dem Stand der Technik bereits bekannten Dosiervorrichtungen zur Verfügung. So kann die Dosiervorrichtung bspw. entsprechend der DE 10 2008 037 397 A1 ausgestaltet sein. Unter Berücksichtigung der oben genannten Kriterien kann eine Vielzahl weiterer Dosiervorrichtungen für die vorliegende Erfindung verwendet werden, die dem Fachmann bekannt sind und daher nicht explizit aufgeführt werden.

Die Dosiervorrichtung kann beispielsweise direkt an der Motorwelle am Motor angeordnet sein, wodurch ein Direktantrieb des rotierenden Dosierorgans gebildet ist. In weiteren Ausführungsformen können Mittel zur Drehmomentübertragung vom Motor auf die Dosiervorrichtung, wie beispielsweise Zahnrad-, Riemen- oder Winkelgetriebe, vorhanden sein.

Die Erfindung sieht weiterhin wenigstens ein Schalteelement vor, welches am Säaggregat bzw. in unmittelbarer Nähe zu diesem angeordnet ist, zur manuell steuerbaren Aktivierung des Antriebsmotors. Das Schaltelement kann im Bereich der Dosiervorrichtung angeordnet sein. Beispielsweise kann je Säaggregat ein Antriebsmotor vorgesehen sein, der über ein an demselben Säaggregat angeordnetes Schaltelement aktiviert oder deaktiviert werden kann. Auch kann ein Schaltelement dergestalt vorhanden sein, dass es mehrere Antriebsmotoren, die an unterschiedlichen Säaggregaten angeordnet sein können, aktivieren oder deaktivieren kann. Die Betätigung des Schaltelementes kann durch einen Benutzer direkt am Schaltelement erfolgen. Wesentlich für die komfortable Betätigungsmöglichkeit der Schaltelemente ist, dass diese jeweils direkt am Säaggregat bzw. räumlich sehr nahe zu diesem angeordnet sind. Sie sind damit leicht und schnell erreichbar. Jedes Säaggregat einer Mehrzahl von Aggregaten kann wahlweise jeweils ein einzelnes, räumlich dem jeweiligen Aggregat zugeordnetes Schaltelement aufweisen, um bspw. im Stillstand der Maschine die Dosiertrommeln in eine definierbare Umdrehungsgeschwindigkeit von bspw. ca. 80 U/min versetzen zu können, ohne dass hierzu die zentrale Steuereinheit im Führerhaus der Zugmaschine betätigt werden muss.

Der wesentliche Vorteil solcher leicht erreichbaren Schaltelemente besteht darin, dass die Bedienperson zum Testen oder Überprüfen der Dosieraggregate, wozu ein kurzes, langsames Drehen der Dosierräder sinnvoll oder notwendig sein kann, nicht mehr in das Führerhaus der Zugmaschine steigen muss, um das dort befindliche Eingabeterminal erreichen zu können. Vielmehr findet er zumindest eine der Funktionen des Eingabeterminals, nämlich das langsame oder schrittweise Anfahren der Antriebsmotoren für die Dosierorgane in ausgelagerter Einbauposition direkt am Säaggregat, wo er gleichzeitig die Vereinzelung und Ablage überprüfen und in Augenschein nehmen und den jeweiligen Antriebsmotor in langsamer Drehzahl in jeweils gewünschten Zeitintervallen aktivieren kann.

Das Schaltelement kann beispielsweise als Kipp-, Druck-, oder Tastschalter ausgebildet sein. In einer Ausführungsform der vorliegenden Erfindung kann das Schaltelement in mindestens zwei Schaltstellungen gebracht werden wobei in der ersten Schaltstellung die Drehzahl des Antriebsmotors konstant und größer als Null ist und in der zweiten Schaltstellung die Drehzahl gleich Null ist. Beispielsweise kann die Drehzahl, welche größer als Null ist, derart gewählt werden, dass eine vollständige Entleerung der Einzelkornsaat aus der Dosiervorrichtung des Säaggregates erfolgen kann. Davon abgesehen kann das Schaltelement weitere Schaltstellung beinhalten, welche beispielsweise unterschiedliche Drehzahlregelungen für den Antriebsmotor umfassen können.

In einer Ausführungsform der vorliegenden Erfindung ist zudem eine Steuereinheit vorhanden, die mit dem Schaltelement und dem Antriebsmotor verbunden ist, wobei die Aktivierung des Antriebsmotors durch das Schaltelement über die Steuereinheit erfolgt. Die Verbindung kann beispielsweise via Kabel aber auch kabellos erfolgen. Auf der Steuereinheit können zudem vordefinierte Steuerungsfunktionen für den Antriebsmotor abgelegt sein. In einer bevorzugten Ausführungsform wird nach Betätigung des Schaltelementes durch einen Benutzer ein Betätigungssignal vom Schaltelement an die Steuereinheit weitergegeben. Weiter wird in einem nächsten Verfahrensschritt ein Steuersignal von der Steuereinheit an den Antriebsmotor zum Aktivieren oder Deaktivieren des Antriebsmotors weitergegeben. Hierbei kann ein Steuersignal an einen oder auch an mehrere Antriebsmotoren zum Aktivieren oder Deaktivieren der jeweiligen Antriebsmotoren weitergegeben werden.

Selbstverständlich umfasst die Funktionalität der Schaltelemente auch das vorübergehende oder vollständige Deaktivieren einzelner Säaggregate, bspw. bei festgestellten Defekten oder bei der Erzeugung von Fahrspuren während des Sävorganges.

Eine weitere vorteilhafte Variante der Erfindung kann ein Fernsteuerterminal vorsehen, mit dem der Benutzer die verschiedenen Säaggregate durch Funkübertragung oder mittels Infrarotsignalen aktivieren und/oder steuern kann. Bei dieser Variante kann die Steuereinheit diese Signale vorzugsweise empfangen, so dass sie in die Lage versetzt wird, in Abhängigkeit von den jeweils empfangenen Steuersignalen die Elektromotoren der Säaggregate zu aktivieren, langsam anlaufen oder ruhen zu lassen.

Weiterhin umfasst die vorliegende Erfindung ein Verfahren zum Steuern einer Dosiervorrichtung einer Sämaschine für die Einzelkornsaat, die mindestens einen Saatgutvorratsbehälter und mindestens ein an einem Tragrahmen angeordnetes Säaggregat umfasst. Das Säaggregat umfasst weiterhin eine elektromotorisch betriebene Dosiervorrichtung zur vereinzelten Ausgabe von Saatkörnern. Das Verfahren ist dadurch gekennzeichnet, dass ein Antriebsmotor des Säaggregats über ein manuell betätigbares, am Säaggregat angeordnetes Schaltelement aktiviert oder deaktiviert werden kann. So kann vorgesehen sein, dass der Antriebsmotor bei Aktivierung durch das Schaltelement eine konstante vordefinierte Drehzahl aufweist und bei Deaktivierung durch das Schaltelement die Drehzahl des Antriebsmotors gleich Null ist.

Gemäß einer bevorzugten Ausführungsvariante umfasst die Sämaschine eine Steuereinheit, die mit mindestens einem Schaltelement und mindestens einem Antriebsmotor verbunden ist, wobei das Verfahren zum manuell gesteuerten Aktivieren oder Deaktivieren einzelner Säaggregate die folgenden Schritte umfasst:
- Betätigen des Schaltelementes durch einen Benutzer,
- Weitergabe eines Betätigungssignals von dem Schaltelement an die Steuereinheit,
- Weitergabe eines Steuersignals von der Steuereinheit an mindestens einen Antriebsmotor zum Aktivieren oder Deaktivieren des Antriebsmotors.

Auf diese Weise können die gewünschten Überprüfungs- oder Inspektionsarbeiten an einzelnen, mehreren oder allen Säaggregaten der Reihe nach durchgeführt werden, um bspw. deren Vereinzelungsfunktion vor Ort überprüfen und verifizieren zu können.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Es ist für einen Fachmann vorstellbar, dass Abwandlungen oder Änderungen der Erfindung von den bevorzugten Ausführungsbeispielen gemacht werden können, ohne dabei den Schutzbereich der in der Beschreibung genannten oder in den Ansprüchen geschützten Gegenstände zu verlassen.
Fig. 1 zeigt eine schematische Perspektivansicht einer Ausführungsform einer erfindungsgemäßen Sämaschine.
Fig. 2 zeigt eine schematische Perspektivansicht eines einzelnen Säaggregates gemäß Fig. 1.
Fig. 3 zeigt eine schematische Perspektivansicht des Säaggregats mit direkt angeflanschtem elektrischem Antriebsmotor.

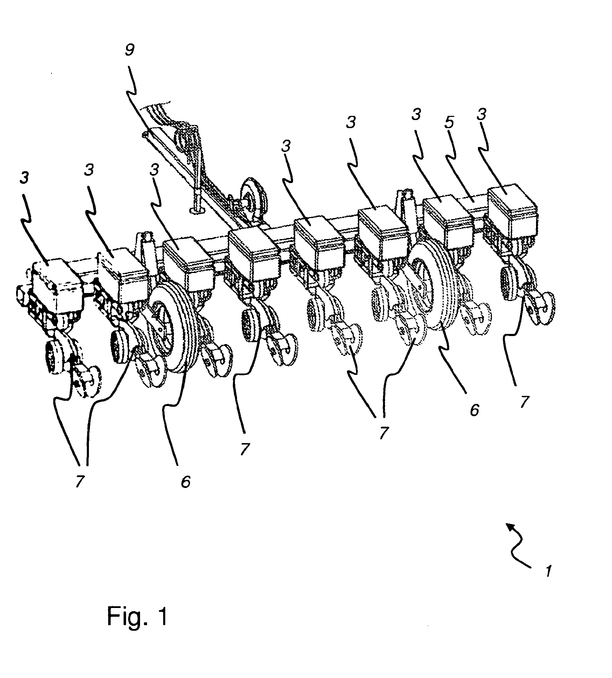

In Fig. 1 ist eine schematische Perspektivansicht einer Ausführungsform einer Sämaschine 1 der beanspruchten Art dargestellt. Die von einem hier nicht dargestellten Zugfahrzeug gezogene 8-reihige Sämaschine 1 umfasst mehrere Säaggregate 7 mit diesen jeweils zugeordneten Saatgutvorratsbehältern 3. Die Säaggregate 7 sind jeweils an einem quer zur Fahrtrichtung angeordneten Tragrahmen 5 verankert. Die Sämaschine 1 ist über mechanische Verbindungsmittel 9 mit dem Zugfahrzeug verbunden. Weiterhin umfasst die Sämaschine 1 zwei luftbereifte Stützräder 6, die ebenfalls am Tragrahmen 5 aufgehängt sind und sich jeweils zwischen benachbarten Säaggregaten 7 befinden.

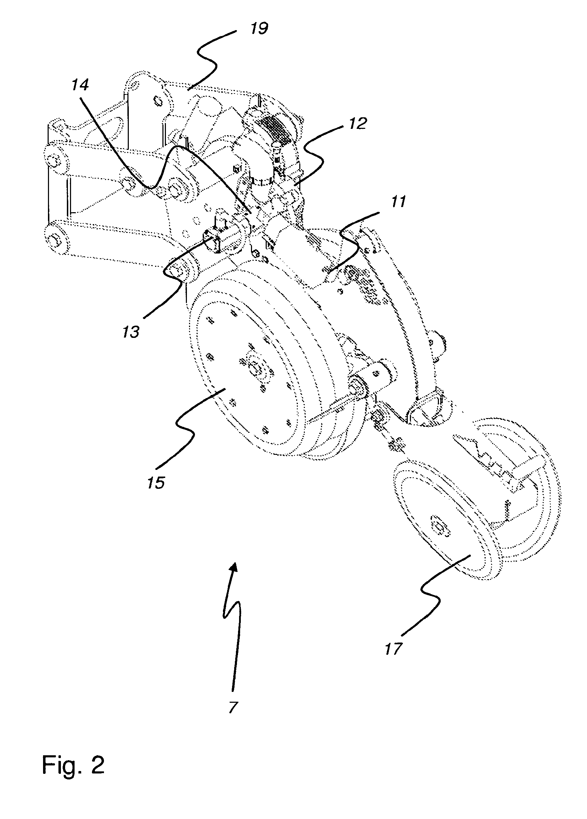

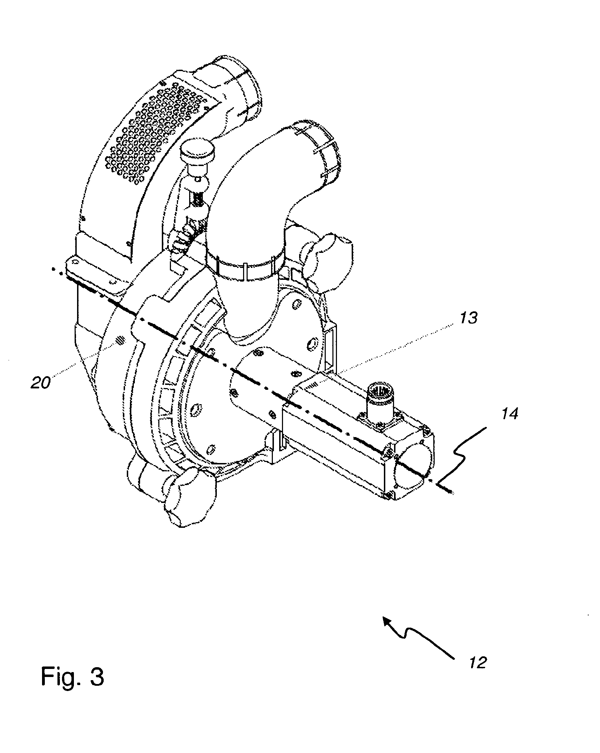

Die schematische Perspektivansicht der Fig. 2 zeigte eine Ausführungsvariante eines einzelnen Säaggregates 7 einer Sämaschine 1 gemäß Fig. 1. An einer Oberseite des Säaggregat 7, in gut erreichbarer Lage, befindet sich ein Schaltelement 11 zur manuell steuerbaren Aktivierung eines elektrischen Antriebsmotors 13. Der Antriebsmotor 13 ist über eine Welle 14 direkt mit der Dosiervorrichtung 12 verbunden, wie dies in Figur 3 deutlich erkennbar ist. In weiteren Ausführungsformen kann der Antriebsmotor auch über Zwischengetriebe, wie beispielsweise über Zahnrad-, Riemen- oder Winkelgetriebe mit der Dosiereinheit 12 verbunden sein. Weiter ist ein Stütz- und Laufrad 15 und dahinter angeordnete Andruckrollen 17 am Säaggregat 7 angeordnet. Das Säaggregat 7 ist über den Verbindungsabschnitt 19 gelenkig und/oder federn aufgehängt am Tragrahmen 5 (siehe Fig. 1) fixiert.

Insbesondere die Fig. 2 verdeutlicht die relativ exponierte Lage des Schaltelements 11, das von einem am Säaggregat stehenden Benutzer bequem von Hand zu erreichen sein muss. Das Schaltelement 11 umfasst einen Taster oder Schalter, der direkt oder über eine hier nicht dargestellte Steuereinheit mit dem elektrischen Antriebsmotor 13 gekoppelt ist, so dass dessen elektrische Energie zu- oder abgeschaltet werden kann. Das Schaltelement 11 ermöglicht auf diese Weise die gewünschte schnelle Inspektion und Überprüfung der einwandfreien Vereinzelungsfunktion der Säaggregate 7, ohne dass hierzu jeweils die Führerkabine des Zugfahrzeugs mit dem darin befindlichen Steuerterminal für die Sämaschine aufgesucht werden muss. Die Überprüfung der einzelnen Säaggregate 7 auf ihre fehlerfreie Funktion geht auf diese Weise wesentlich schneller vonstatten als dies bisher der Fall war.

Die Darstellung der Fig. 3 zeigt eine perspektivische Detailansicht des Säaggregats, bei der insbesondere das Dosieraggregat 12 mit seinem Gehäuse 20 und dem an einer Stirnseite des Gehäuses 20 angeflanschten Antriebsmotor 13 deutlich erkennbar ist. Bei dieser gezeigten Variante fluchten die Achsen 14 der Antriebswelle der rotierenden Vereinzelungstrommel der Dosiervorrichtung 12 und der diese antreibende Welle des Antriebsmotors 13 miteinander.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1: Sämaschine
- 3: Saatgutvorratsbehälter
- 5: Tragrahmen
- 6: Tragrad
- 7: Säaggregat
- 9: Mechanische Verbindungsmittel
- 11: Schaltelement
- 12: Dosiervorrichtung
- 13: Antriebsmotor
- 14: Welle
- 15: Stütz- und Laufrad
- 17: Andruckrollen
- 19: Verbindungsmittel
- 20: Gehäuse

## Patentansprüche

1. Sämaschine (1) für die Einzelkornsaat mit mindestens einem Saatgutvorratsbehälter (3) und mindestens einem an einem Tragrahmen (5) angeordneten, vom Saatgutvorratsbehälter (3) versorgten Säaggregat (7), das eine elektromotorisch betriebene Dosiervorrichtung (12) zur vereinzelten Ausgabe von Saatkörnern aufweist, wobei am Säaggregat (7) oder räumlich sehr nah an diesem ein Schaltelement (11) zur steuerbaren Aktivierung eines Antriebsmotors (13) des Säaggregates (7) angeordnet ist, **dadurch gekennzeichnet, dass** das Schaltelement (11) manuell und direkt durch einen Benutzer betätigbar ist.

2. Sämaschine nach Anspruch 1, bei der das Schaltelement (11) ein Kipp-, Druck-, oder Tastschalter ist.

3. Sämaschine nach Anspruch 1 oder 2, bei der das Schaltelement (11) von einem an der Dosiervorrichtung (12) stehenden Benutzer von Hand erreichbar ist.

4. Sämaschine nach einem der Ansprüche 1 bis 3, bei der das Schaltelement (11) in mindestens zwei Schaltstellungen gebracht werden kann und in der ersten Schaltstellung die Drehzahl des Antriebsmotors (13) konstant und größer als Null ist und in der zweiten Schaltstellung die Drehzahl gleich Null ist.

5. Sämaschine nach einem der Ansprüche 1 bis 4, bei der eine Steuereinheit vorhanden ist, die mit dem Schaltelement (11) und dem Antriebsmotor (13) verbunden ist und die Aktivierung des Antriebsmotors (13) durch das Schaltelement (11) über die Steuereinheit erfolgt.

6. Verfahren zum Steuern einer Dosiervorrichtung (12) einer Sämaschine (1) für die Einzelkornsaat mit mindestens einem Saatgutvorratsbehälter (3) und mindestens einem an einem Tragrahmen (5) angeordneten Säaggregat (7), wobei das Säaggregat (7) eine elektromotorisch betriebene Dosiervorrichtung (12) zur vereinzelten Ausgabe von Saatkörnern umfasst, **dadurch gekennzeichnet, dass** ein Antriebsmotor (13) des Säaggregats (7) über ein manuell und von einem Benutzer direkt betätigbares, am Säaggregat (7) angeordnetes Schaltelement (11) aktiviert oder deaktiviert wird.

7. Verfahren nach Anspruch 6, wobei bei Aktivierung des Antriebsmotors (13) durch das Schaltelement (11) der Antriebsmotor (13) eine konstante vordefinierte Drehzahl aufweist und bei Deaktivierung des Antriebsmotors (13) durch das Schaltelement (11) die Drehzahl des Antriebsmotors (13) gleich Null ist.

8. Verfahren nach Anspruch 6 oder 7, bei dem die Sämaschine eine Steuereinheit umfasst, die mit mindestens einem Schaltelement (11) und mindestens einem Antriebsmotor (13) verbunden ist, wobei das Verfahren die folgenden Schritte umfasst:
- Betätigen des Schaltelementes (11) durch einen Benutzer,
- Weitergabe eines Betätigungssignals von dem Schaltelement (11) an die Steuereinheit,
- Weitergabe eines Steuersignals von der Steuereinheit an mindestens einen Antriebsmotor (13) zum Aktivieren oder Deaktivieren des Antriebsmotors (13).

## Claims

1. Sowing machine (1) for single-grain sowing, having at least one seed storage hopper (3) and at least one sowing unit (7), which is arranged on a carrier frame (5) and which is supplied by the seed storage hopper (3) with seeds, said sowing unit (7) comprising an electric motor-operated dispensing device (12) for metering out individual seeds, wherein a switching element (11) for controllably actuating a drive motor (13) for the sowing unit (7) is arranged at or in the immediate vicinity of the sowing unit (7), **characterised in that** the switching element (11) can be actuated manually and directly by the operator of the machine.

2. Sowing machine according to claim 1 wherein the switching element (11) is a toggle, pressure, or push-button switch.

3. Sowing machine according to claim 1 or 2 wherein the switching element (11) is located within manual reach of an operator of the machine who is standing next to the dispensing device (12).

4. Sowing machine according to one of the claims 1 to 3 wherein the switching element (11) can be set to at least two switch positions controlling the rotational speed of the drive motor (13), with the rotational speed being constantly greater than zero in the first switch position and equal to zero in the second switch position.

5. Sowing machine according to one of the claims 1 to 4 wherein a control unit is connected to the switching element (11) and to the drive motor (13) and wherein the drive motor (13) actuation is effected by the switching element (11) via the control unit.

6. Method for controlling a dispensing device (12) of a sowing machine (1) for single-grain sowing, having at least one seed storage hopper (3) and at least one sowing unit (7), which is arranged on a carrier frame (5), wherein the sowing unit (7) comprises an electric motor-operated dispensing device (12) for metering out individual seeds, **characterised in that** a drive motor (13) for the sowing unit (7) is activated or deactivated by means of a switching element (11) arranged at the sowing unit (7), said switching element being actuable manually and directly by the operator of the machine.

7. Method according to claim 6 wherein the drive motor (13) runs at a constant, predefined rotational speed when said drive motor (13) is activated by means of the switching element (11) and wherein the rotational speed of the drive motor (13) is equal to zero when said drive motor (13) is deactivated by means of the switching element (11).

8. Method according to claim 6 or 7 wherein the sowing machine comprises a control unit, which is connected to at least one switching element (11) and at least one drive motor (13), wherein the method comprises the following steps:
- actuation of the switching element (11) by the operator of the machine,
- transmission of the actuating signal from the switching element (11) to the control unit,
- and transmission of the control signal from the control unit to at least one drive motor (13), wherein said control signal activates or deactivates the drive motor (13).

## Revendications

1. Semoir (1) pour semis monograine, comprenant au moins un réservoir de semences (3) et au moins un agrégat de semoir (7) qui est disposé sur un bâti de support (5) et alimenté par ledit réservoir de semences (3) et qui présente un dispositif de dosage (12) entraîné par moteur électrique et destiné à distribuer les grains de semence de façon individualisée, un élément de commutation (11) pour l'activation commandable d'un moteur d'entraînement (13) de l'agrégat de semoir (7) étant disposé sur ledit agrégat de semoir (7) ou, vu dans l'espace, très près de celui-ci, **caractérisé par le fait que** ledit élément de commutation (11) peut être actionné manuellement et directement par un utilisateur.

2. Semoir selon la revendication 1, dans lequel ledit élément de commutation (11) est un interrupteur à bascule, à pression ou un commutateur à action fugitive.

3. Semoir selon la revendication 1 ou 2, dans lequel ledit élément de commutation (11) est accessible par la main par un utilisateur se trouvant sur ledit dispositif de dosage (12).

4. Semoir selon l'une quelconque des revendications 1 à 3, dans lequel ledit élément de commutation (11) peut être amené dans au moins deux positions de commutation et dans lequel, dans la première position de commutation, le nombre de tours du moteur d'entraînement (13) est constant et supérieur à zéro et, dans la deuxième position de commutation, le nombre de tour est égal à zéro.

5. Semoir selon l'une quelconque des revendications 1 à 4, dans lequel une unité de commande est présente qui est reliée audit élément de commutation (11) et audit moteur d'entraînement (13), et l'activation du moteur d'entraînement (13) est réalisée par ledit élément de commutation (11) via ladite unité de commande.

6. Procédé de commande d'un dispositif de dosage (12) d'un semoir (1) pour semis monograine, comprenant au moins un réservoir de semences (3) et au moins un agrégat de semoir (7) qui est disposé sur un bâti de support (5), ledit agrégat de semoir (7) comprenant un dispositif de dosage (12) qui est entraîné par moteur électrique et destiné à distribuer les grains de semence de façon individualisée, **caractérisé par le fait qu'**un moteur d'entraînement (13) de l'agrégat de semoir (7) est activé ou désactivé par un élément de commutation (11) qui peut être actionné manuellement et directement par un utilisateur et qui est disposé sur ledit agrégat de semoir (7).

7. Procédé selon la revendication 6, dans lequel, lorsque le moteur d'entraînement (13) est activé par ledit élément de commutation (11), le moteur d'entraînement (13) présente un nombre de tours constant prédéfini et, lorsque le moteur d'entraînement (13) est désactivé par ledit élément de commutation (11), le nombre de tours du moteur d'entraînement (13) est égal à zéro.

8. Procédé selon la revendication 6 ou 7, dans lequel le semoir comprend une unité de commande qui est reliée à au moins un élément de commutation (11) et à au moins un moteur d'entraînement (13), le procédé comprenant les étapes suivantes consistant à :
- actionner ledit élément de commutation (11) par un utilisateur,
- transmettre un signal de manoeuvre de l'élément de commutation (11) à ladite unité de commande,
- transmettre un signal de commande de ladite unité de commande à au moins un moteur d'entraînement (13) pour activer ou désactiver ledit moteur d'entraînement (13).
